# EUROPÄISCHE PATENTSCHRIFT

(11) **EP 0 678 443 B1**
(45) Veröffentlichungstag und Bekanntmachung des Hinweises auf die Patenterteilung: **05.01.2000**
(21) Anmeldenummer: 95105795.9
(22) Anmeldetag: 19.04.1995
(51) Int. Cl.: B62D 55/084, B62D 49/08, E02F 9/02

(54) **Fahrwerk, insbesondere für mobile Arbeitsgeräte und Fahrzeuge**
Running gear, especially for mobile working machines and vehicles
Train de roulement, notamment pour machines de travail mobiles et véhicules

(30) Priorität: 20.04.1994 DE 9406572 U
(43) Veröffentlichungstag der Anmeldung: 25.10.1995
(73) Patentinhaber: B. Teupen Maschinenbaugesellschaft mbH, D-48599 Gronau-Epe (DE)
(72) Erfinder: Leusder, Hermann, D-48607 Ochtrup (DE)
(74) Vertreter: Hoffmeister, Helmut, Dr. Dipl.-Phys.

(56) Entgegenhaltungen:
- WO-A-89/00928
- DE-A- 3 706 931
- DE-C- 3 802 584
- GB-A- 2 145 985
- US-A- 3 430 790
- US-A- 4 241 803

## Beschreibung

Die Erfindung betrifft ein Fahrwerk, insbesondere für mobile Arbeitsgeräte und Fahrzeuge, bestehend aus
- einem Fahrgestell,
- einem Chassis, an dem das Fahrgestell angeordnet ist,
- wenigstens zwei drehgelenkig am Fahrgestell und am Chassis angebrachten Parallelgestängen, denen jeweils wenigstens ein zwischen dem Fahrgestell und dem Chassis kraftschlüssig positioniertes Ausfahrelement zugeordnet ist, wobei die Parallelgestänge in Drehachsen eines Fahrgestell-Stangenelements und eines Chassis-Stangenelements liegen und in etwa vertikaler Ebene gehalten sind.

Unter mobilen Arbeitsgeräten werden im folgenden Hubarbeitsbühnen, Anlegeaufzüge, Gerüstaufzüge, Möbelaufzüge, Krananlagen, Universalbewegungs- und Ausschachtungsmaschinen u. dgl. und Fahrzeugen Personenkraftwagen, Lastkraftwagen, Geländefahrzeuge u. dgl. verstanden.

Aus der US-PS 3 430 790 ist ein fahrbarer Bagger bekannt, der ein Fahrwerk der eingangs genannten Art aufweist. Die durch die gelenkige Verbindung zwischen dem Fahrgestell und dem Chassis sich ergebenden Vorteile bestehen darin, daß durch ein Verstellen des Parallelgestänges mit Hilfe des Ausfahrelements das Fahrgestell in seiner Höhe verändert werden kann.

Dadurch wird die Möglichkeit gegeben, eine bestehende Schrägstellung einer Straße, die den Untergrund für das Fahrgestell bildet, auszugleichen. Damit wird z.B. die volle Hubkraft einer mobilen Krananlage gewährleistet. Die Arbeits- und Bewegungsfähigkeit ist bei einem nicht waagerechten Untergrund unvermindert.

Nachteilig ist jedoch die Anordnung der Ausfahrelemente zwischen einem Drehlager am Chassis und einem Drehlager am Fahrgestell und die sich hieraus gebende Kinematik an den Parallelgestängen. Nur die vertikale Komponente der durch das Ausfahrelement ausgeübten Kraft bewirkt ein Anheben des Chassis gegenüber dem Fahrgestell, während die horizontale Komponente ausschließlich hohe Zugkräfte im Parallelgestänge und in dessen Lagern hervorruft. Da es in vielen Fällen wünschenswert ist, ein möglichst langes, vom Chassis weit auskragendes Parallelgestänge zu wählen, um eine große Spurbreite und Kippstabilität zu erreichen, zugleich aber der vertikale Abstand der Drehlager der Stangenelemente durch die Bauweise des Fahrgestells nach oben begrenzt ist, ergibt sich ein ungünstiges Verhältnis der Kraftkomponenten. Die wirksame, vertikale Hubkraft ist dann geringer als die horizontale Kraftkomponente, die ausschließlich belastend für das Parallelgestänge wirkt.

Ein weiterer Nachteil des bekannten Fahrwerks ist die durch die Anordnung des Ausfahrelementes begrenzte Verstellmöglichkeit des Fahrwerks, so daß bei großen Höhenunterschieden, z.B. in einer Hanglage, kein Ausgleich der Geländeneigung mehr möglich ist.

Der Erfindung liegt die Aufgabe zugrunde, die vorstehend genannten Nachteile bei einem Fahrwerk der eingangs genannten Art zu beseitigen und bei einem Fahrwerk mit einem gelenkigen Parallelgestänge, insbesondere von mobilen Arbeitsgeräten und Fahrzeugen, dessen Anpassungsmöglichkeit zwischen Fahrgestell und Chassis zu verbessern.

Diese Aufgabe wird erfindungsgemäß dadurch gelöst, daß
- das (die) Ausfahrelement(e) jeweils an einem Befestigungspunkt in dem oberen Stangenelement nahe der in dem Fahrgestell-Stangenelement befindlichen Drehachse und an einem Befestigungsstützpunkt des Chassis angeordnet ist (sind), und
- die Parallelgestänge torsionsbeständig und biegesteif sind.

Das torsions- und biegesteif ausgeführt Parallelgestänge nimmt alle auftretenden Kräfte auf, die durch den rauhen Betrieb des Fahrwerks entstehen. Von besonderem Vorteil ist die Anordnung des bzw. der Ausfahrelemente durch die Verlagerung des Befestigungspunktes in das Oberstangenelement nahe der Drehachse und des Befestigungsstützpunktes am Chassis. Hierdurch kann das Ausfahrelement so am Chassis plaziert sein, daß eine gute Kraftausnutzung erreicht wird, wobei die vertikale Hubkomponente der Kraft des Ausfahrelementes stets größer ist als die in Richtung der Stangenelemente wirkende horizontale Komponente.

Vorteilhaft ist auch, daß mit dieser Kinematik schon mit kleinen Verstellwegen am Ausfahrelement ein relativ großer Hub des Chassis zu erreichen ist, so daß auch starke Geländeneigungen ausgleichbar sind.

Die Anzahl der Ausfahrelemente richtet sich dabei konkret nach dem jeweiligen Einsatzfall. So ist es möglich, jeder Parallelstangen-Gruppierung eins oder mehrere zuzuordnen, oder diese gemeinsam über ein durchgehendes FahrgestellStangenelement zu verteilen.

Vorteilhaft ist es, wenn die Befestigungstützpunkte sich in über dem Chassis angeordneten Aufbauten befinden. Hierdurch ist es möglich, die entsprechende Hubhöhe und Entfernung des Ausfahrelements zu definieren und damit seine Kraftausübung festzulegen. Selbstverständlich ist es auch möglich, die Befestigungsstützpunkte durch einen separaten Trägeraufbau oder ähnliches zu realisieren.

Vorteilhaft ist es, wenn das Fahrgestell-Stangenelement und das Chassis-Stangenelement den jeweiligen Achspunkten des Fahrgestells an einer Seite zusammengefaßt oder einzeln mit jeweils den parallel zueinander liegenden und in den Drehpunkten angeordneten Stangenelementen und einem zugehörigen Ausfahrelement zugeordnet ausgebildet sind. Sind das Fahrgestell-Stangenelement und das ChassisStangenelement und das zugehörige Ausfahrelement an einer Seite zusammengefaßt angeordnet, wird die gesamte eine Seite des Fahrgestells gegenüber dem Chassis verstellt. Durch diese Art der Verstellung sind Schrägstellungen des Untergrunds ausgleichbar sowie Spurweitenänderungen durchführbar. Steht also das Fahrgestell im rechten Winkel zu der Schrägstellung, ist es möglich, durch einseitige Verstellung einer Seite des Fahrgestells diese Höhendifferenz auszugleichen. Sind hingegen jedem Achspunkt das Fahrgestell-Stangenelement und das Chassis-Stangenelement mit dem zugehörigen Ausfahrelement zugeordnet, besteht eine Einzelverstellung in jedem Achspunkt. Durch die Verstellbarkeit der einzelnen Gelenkverbindungen ist es auch möglich, einen Höhenunterschied auszugleichen, der in Fahrtrichtung des jeweiligen Fahrgestells entsteht. Diese Ausgleichmöglichkeiten, die im Prinzip nach allen Seiten gegeben sind, werden durch die konkrete Konstruktion bezogen auf den speziellen Einsatzfall gegeben. Grundsätzlich ist es aber möglich, daß mit Hilfe des veränderbaren Fahrgestells das Chassis vollkommen waagerecht einjustiert werden kann. Mit dieser Einzelverstellung ist es also möglich, nicht nur Schrägstellungen, sondern auch eine Einzelanpassung der jeweiligen Achspunkte an bestehende Unebenheiten vorzunehmen.

Hierbei können die Ausfahrelemente mit einer zentralen Steuerung verbunden sein, durch die das Chassis anhand von eingegebenen Fest- und Sollwerten einjustierbar ist.

Das Fahrgestell ist dabei vorteilhafterweise ein Fahrgestell mit Einzelradhalterung, so daß eine schnelle und sichere Anpassung des Fahrwerks an die sich verändernden Unebenheiten gegeben ist.

Das Fahrgestell kann aber auch als Ketten- oder Räderfahrwerk ausgebildet sein, bei dem eine an einer Seite zusammengefaßte Verstellung gegenüber dem Chassis vorgenommen wird.

Vorteilhaft ist es, wenn die Ausfahrelemente als Hydraulikzylinder, Drehgestänge und/oder dergleichen ausgebildet sind. Wegen seiner geringen Anfälligkeit bietet sich selbstverständlich der Einsatz von Hydraulikzylindern an. Diese sind in einfacher Art und Weise in ihrer Ausfahrstellung veränderbar. Vor allem sind sie in der Lage und fähig, große Kräfte zu übertragen und eine einmal eingenommene Stellung zu halten.

Ein Ausführungsbeispiel der Erfindung ist in der Zeichnung dargestellt und wird im folgenden näher beschrieben. Es zeigen:
- Fig. 1: ein erfindungsgemäßes Fahrwerk in einer schematischen Teilzeichnung,
- Fig. 2: ein mit einem Fahrwerk gemäß Fig. 1 ausgerüstetes mobiles Arbeitsgerät in einer Grundstellung in einer schematischen perspektivischen Darstellung und
- Fig. 3: ein Arbeitsgerät gemäß Fig. 2 mit einer geänderten Stellung von Parallelgestänge eines Fahrwerkes.

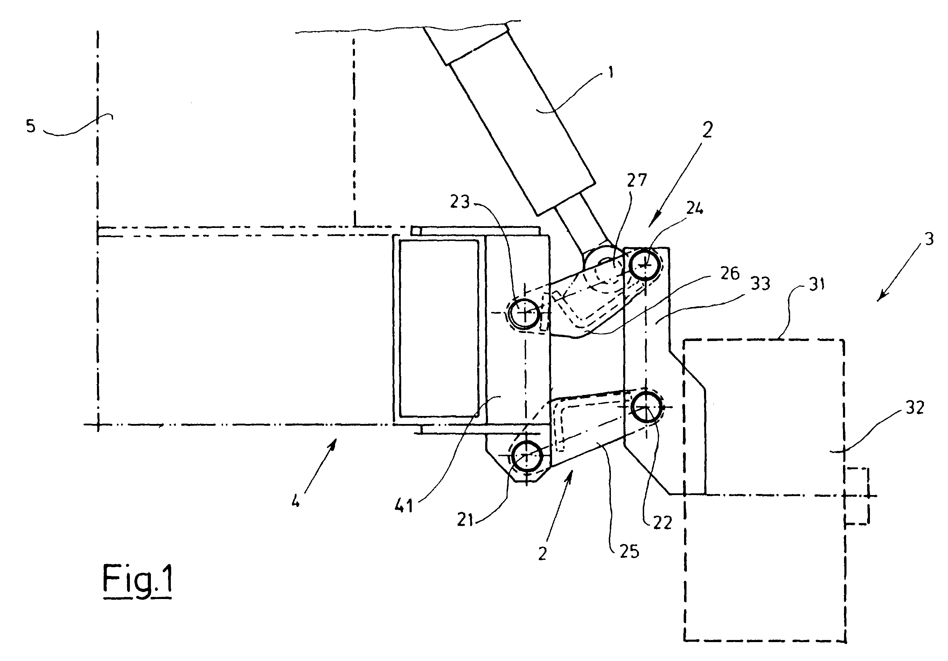

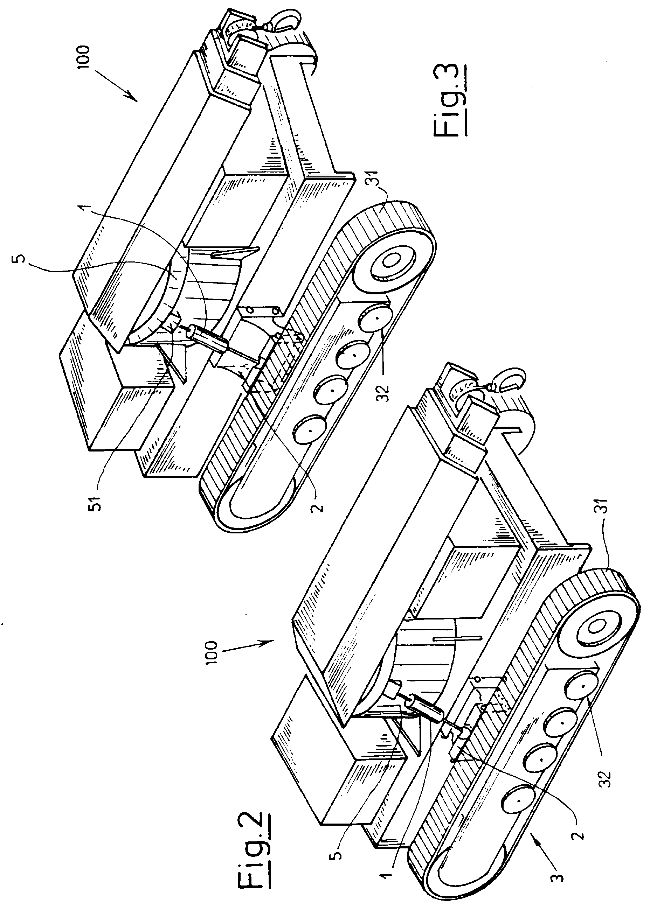

In Fig. 1 ist ein Fahrwerk eines mobilen Arbeitsgerätes 100 dargestellt. Es besteht aus einem Fahrgestell 3 und einem Chassis 4. Das Fahrgestell 3 ist hier als Kettenfahrwerk ausgebildet. Es setzt sich aus zwei gegenüberliegenden Ketten 31 und je einem Kettenrollenwerk 32 zusammen. Das Kettenrollenwerk besteht dabei aus mehreren Rollen, Stangen- und Spannelementen, auf dem sich die Kette in bekannter Art und Weise bewegen kann (vgl. auch Fig. 2 und 3).

Auf dem Chassis 4 sind Aufbauten 5 angeordnet. Solche Aufbauten können zum Beispiel Hebezeuge, Aufzugteile, Arbeitsbühnen u. dgl. sein.

Wesentlich ist, daß zwischen dem so ausgebildeten Fahrgestell 3 und dem Chassis 4 Parallelgestänge 2 mit einem dazugehörigen Ausfahrelement 1 angeordnet sind.

Die Parallelgestänge 2 bestehen, wie Fig. 1 zeigt, aus Stangenelementen 25 bzw. 26, die parallel zueinander in der horizontalen Ebene liegen. Beide Stangenelemente 25 und 26 werden mit Drehachsen 21, 22, 23, 24 in einem zum Kettenrollenwerk 32 des Fahrgestells 3 gehörenden Fahrgestell-Stangenelement 33 und in einem zum Chassis 4 gehörenden Chassis-Stangenelement 41 gehalten. Das Fahrgestell-Stangenelement 33 und das Chassis-Stangenelement 41 liegen parallel zueinander in der vertikalen Ebene, d.h. senkrecht zur Waagerechten. Sie sind als durchgehende Elemente, z.B. als Träger, Hohlprofile o. dgl. ausgebildet. Selbstverständlich ist es auch möglich, die Elemente 33 und 41 geteilt, den jeweiligen Achspunkten zugeordnet, auszubilden. Das Fahrgestell-Stangenelement 33 ist mit dem Kettenrollenwerk 32 verbunden. Das Ausfahrelement 1 ist an einem Befestigungsstützpunkt 51 der Aufbauten 5 angeordnet und mit der anderen, entgegengesetzten Seite in einem Befestigungspunkt 27 des obersten Stangenelements 26 drehbar gelagert. Die Anzahl der einzelnen Ausfahrelemente 1 wird dabei durch den konkreten Einsatzfall bestimmt, ebenso die Länge und die Anzahl der Stangenelemente 25 und 26.

Die Parallelgestänge 2 für die gegenüberliegende Seite des Chassis 4 sind, wie in Fig. 1 dargestellt, spiegelbildlich und in gleicher Art und Weise wie oben ausführlich beschrieben, ausgeführt.

Die Arbeitsweise des Fahrwerks, wie sie sich aus dem dargestellten Ausführungsbeispiel ergibt, sei erläutert:

Sind die Parallelgestänge 2, die für sich torsions- und biegesteif ausgeführt sind, an beiden Seiten des Chassis 4 gleich eingestellt, befindet sich das Chassis in einer parallelen Stellung zur Achsstellung. Damit nimmt das Chassis 4 mit seinen Aufbauten 5, wie Fig. 2 zeigt, eine üblicherweise bekannte waagerechte Grundstellung ein, d.h., die Aufbauten 5 befinden sich im rechten Winkel zum Untergrund, z.B. zu einer Straße.

Wird das Ausfahrelement 1 einer Seite ausgefahren, führt das, wie Fig. 3 zeigt, zu einer Schrägstellung des Chassis 4 mit seinen Aufbauten 5. Das Fahrgestell 3 bleibt dabei mit seinen Ketten in Bodenkontaktstellung. Wird das gegenüberliegende Parallelgestänge 2 durch das zugehörige Ausfahrelement 1 in gleicher Weise betätigt, nimmt das Arbeitsgerät 100 eine weitere Grundstellung ein. Durch die Kurvenbahn der Parallelgestänge stellt sich eine gewollte Spurweiten-Veränderung ein. In dieser Grundstellung befindet sich das Chassis 4 mit den Aufbauten 5 in etwa wieder parallel zum Untergrund, aber mit einem höheren Abstand vom Untergrund und einer verringerten Spurweite.

Wesentlich ist, daß beide Seiten des Fahrgestells 3 mit ihren Ketten 31 und ihren Kettenrollenwerken 32 einzeln verstellt werden können. Durch diese Einzelverstellung ist es möglich,
- geringe Durchfahrtshöhen durch ein Absenken des Chassis 4 zu durchfahren,
- bei abgesenktem Chassis 4 die Standfestigkeit des gesamten Fahrwerks 3 zu erhöhen,
- sich Geländeunebenheiten anzupassen durch ein Anheben des Chassis 4 mit einer damit verbundenen Spurweiten-Verringerung, an Böschungen die Neigung durch eine Verstellung einer Seite des Fahrwerks 3 auszugleichen.

Diese Vorteile machen möglich, daß die Geländegängigkeit des Fahrwerks durch die Verstellmöglichkeit des Fahrgestells 3 wesentlich erhöht wird. Kommen zum Beispiel anstelle von Ketten 31 Räder zum Einsatz, können diese einzeln verstellbar ausgestaltet werden. Daß heißt, jeder Radachse sind jeweils Parallelgestänge 2 mit einem dazugehörigen Ausfahrelement 1 zugeordnet. Selbstverständlich ist es möglich, wie beim Kettenfahrwerk beschrieben, jeweils jede Seite des Fahrgestells 3 in ihrer Gesamtheit verstellbar auszubilden. Die Einzelverstellbarkeit jedes einzelnen Rades ermöglicht darüber hinaus den Vorteil, daß das Chassis 4 waagerecht ohne weitere Hilfs- und Stützelemente eingestellt werden kann. Um die Verstellungen durchführen zu können, wird eine zentrale Steuerung durchgeführt, die gegebenenfalls mit einem Rechner o. dgl. gekoppelt ist. In diesen die zentrale Steuerstelle bildenden Rechner können bestimmte Fest-, Soll- und andere Werte gespeichert werden. Durch eine entsprechende Anwahl nimmt dann das Arbeitsgerät die gewünschte Stellung automatisch ein. Wird zum Beispiel ein Arbeitsgerät in die Waagerechte gebracht werden, damit seine Hubkraft voll genutzt werden kann, ist durch die automatische Einjustierung eine sonst üblicherweise von Hand durchzuführende nicht mehr notwendig. Bei einer Anwendung der Erfindung auf Kraftfahrzeuge kann mit Hilfe von Steuergeräten ebenfalls eine Korrekturlage des Fahrzeugs vorgenommen werden. Gerade für sehr unebene Straßen ist es mit Hilfe einer zentralen Steuereinheit möglich, das Fahrzeug immer in der Waagerechten zu halten. Damit besteht die Möglichkeit, Transporte durchführen zu können, die eine ständig waagerechte Stellung des Chassis 4 unabhängig von dem zu befahrenden Untergrund erfordern.

## Patentansprüche

1. Fahrwerk, insbesondere für mobile Arbeitsgeräte und Fahrzeuge, bestehend aus
- einem Fahrgestell (3),
- einem Chassis (4), an dem das Fahrgestell (3) angeordnet ist,
- wenigstens zwei drehgelenkig am Fahrgestell (3) und am Chassis (4) angebrachten Parallelgestängen (2), denen jeweils wenigstens ein zwischen dem Fahrgestell (3) und dem Chassis (4) kraftschlüssig positioniertes Ausfahrelement (1) zugeordnet ist, wobei die Parallelgestänge in Drehachsen (21, 22, 23, 24) eines Fahrgestell-Stangenelements (33) und eines Chassis-Stangenelements (41) liegen und in etwa vertikaler Ebene gehalten sind,
dadurch gekennzeichnet, daß
- das (die) Ausfahrelement(e) (1) jeweils an einem Befestigungspunkt (27) in dem oberen Stangenelement (26) nahe der in dem Fahrgestell-Stangenelement (33) befindlichen Drehachse (24) und an einem Befestigungsstützpunkt (51) des Chassis (4) angeordnet ist (sind), und
- die Parallelgestänge (2) torsionsbeständig und biegesteif sind.

2. Fahrwerk nach Anspruch 1, dadurch gekennzeichnet, daß die Befestigungsstützpunkte (51) sich in über dem Chassis (4) angeordneten Aufbauten (5) befinden.

3. Fahrwerk nach einem der Ansprüche 1 bis 2, dadurch gekennzeichnet, daß das Fahrgestell-Stangenelement (33) und das Chassis-Stangenelement (41) den jeweiligen Achspunkten des Fahrgestells (3) an einer Seite zusammengefaßt oder einzeln mit jeweils den parallel zueinander liegenden und in den Drehpunkten (21, 22, 23, 24) angeordneten Stangenelementen (25, 26) und einem zugehörigen Ausfahrelement (1) zugeordnet ausgebildet sind.

4. Fahrwerk nach einem der Ansprüche 1 bis 3, dadurch gekennzeichnet, daß die Ausfahrelemente (1) mit einer einer zentralen Steuerung verbunden sind, durch die das Chassis (4) anhand von eingegebenen Fest- und Sollwerten einjustierbar ist.

5. Fahrwerk nach einem der Ansprüche 1 bis 4, dadurch gekennzeichnet, daß das Fahrgestell (3) als Ketten- oder Räderfahrwerk oder als Fahrgestell (3) mit Einzelradhalterung ausgebildet.

6. Fahrwerk nach einem der Ansprüche 1 bis 5, dadurch gekennzeichnet, daß die Ausfahrelemente (1) als Hydraulikzylinder, Drehgestänge und/oder dergleichen ausgebildet sind.

## Claims

1. A running gear, more particularly for mobile work rigs and vehicles, consisting of:
- an undercarriage (3),
- a chassis (4) on which the undercarriage (3) is disposed,
- at least two parallel linkages (2), which are mounted pivotally on the undercarriage (3) and on the chassis (4), and with each of which there is associated at least one extension element (1) positioned non-positively between the undercarriage (3) and the chassis (4), the parallel linkages being situated on rotational axes (21, 22, 23, 24) of an undercarriage bar element (33) and a chassis bar element (41) and being held in a substantially vertical plane,
characterised in that
- the extension element or elements (1) is/are each disposed on a fixing point (27) in the upper bar element (26) near the rotational axis (24) situated in the undercarriage bar element (33) and on a fixing support point (51) of the chassis (4), and
- the parallel linkages are torsion resistant and flexurally stiff.

2. A running gear according to claim 1, characterised in that the fixing support points (51) are situated in superstructures (5) disposed above the chassis (4).

3. A running gear according to claim 1 or 2, characterised in that the undercarriage bar element (33) and the chassis bar element (41) are constructed so as to be associated with the respective axial points of the undercarriage (3) on one side in combination or individually with in each case the bar elements (25, 26) situated parallel to one another and disposed at the rotational points (21, 22, 23, 24), and an associated extension element (1).

4. A running gear according to any one of claims 1 to 3, characterised in that the extension elements (1) are connected to a central control by means of which the chassis (4) is adapted to be adjusted by reference to input fixed and set values.

5. A running gear according to any one of claims 1 to 4, characterised in that the undercarriage (3) is constructed as a tracklaying or wheeled undercarriage or as an undercarriage (3) with individual wheel mounting.

6. A running gear according to any one of claims 1 to 5, characterised in that the extension elements (1) are constructed as hydraulic cylinders, rotary linkages and/or the like.

## Revendications

1. Train de roulement, en particulier pour machines de travail mobiles, ou en d'autres termes, engins de travail et pour véhicules comprenant:
- un chariot (3),
- un châssis (4) auquel le chariot (3) est assemblé
- au moins deux systèmes de tiges parallèles (2) montés à rotation articulée sur le chariot (3) et le châssis (4), à chacun desquels est associé respectivement au moins un élément extensible (1) positionné par effet de force entre le chariot (3) et le châssis (4), les systèmes de tiges parallèles étant situés dans des axes de rotation (21, 22, 23, 24) d'un élément (33) chariot-système de tiges et d'un élément (41) châssis-système de tiges et étant maintenus dans un plan approximativement vertical,
caractérisé en ce que
l'élément extensible ou chacun des éléments extensibles (1) est agencé à un point de fixation (27) dans l'élément (26) de système de tiges près de l'axe de rotation (24) qui se trouve dans l'élément (33) chariotsystème de tiges et à un point d'appui de fixation (51) du châssis (4) et
les systèmes de tiges parallèles (2) résistent à la torsion et à la flexion.

2. Train de roulement selon la revendication 1, caractérisé en ce que les points d'appui de fixation (51) se trouvent dans des structures (5) agencées au-dessus du châssis (4).

3. Train de roulement selon l'une quelconque des revendications 1 à 2, caractérisé en ce que l'élément (33) chariot-système de tiges et l'élément (41) châssis-système de tiges sont réalisés soit en étant assemblés aux points axiaux respectifs du chariot (3) sur l'un des côtés, soit en étant associés individuellement chacun aux éléments respectifs (25, 26) de systèmes de tiges parallèles entre eux agencés dans les points de rotation (21, 22, 23, 24) et à l'élément extensible correspondant (1).

4. Train de roulement selon l'une quelconque des revendications 1 à 3, caractérisé en ce que les éléments extensibles (1) sont reliés à une commande centrale au moyen de laquelle le châssis (4) peut être ajusté à l'aide de valeurs fixes et de consigne, qui sont prédéfinies.

5. Train de roulement selon l'une quelconque des revendications 1 à 4, caractérisé en ce que le chariot (3) est réalisé sous forme de train de roulement à chaînes ou à roues ou sous forme de chariot (3) à suspension à roues indépendantes.

6. Train de roulement selon l'une quelconque des revendications 1 à 5, caractérisé en ce que les éléments extensibles (1) sont réalisés sous forme de vérin hydraulique, de systèmes de tiges rotatifs et/ou similaires.
